# EUROPEAN PATENT APPLICATION

(11) **EP 2 047 986 A2**
(43) Date of publication of application: **15.04.2009**
(21) Application number: 08164875.0
(22) Date of filing: 23.09.2008
(51) Int. Cl.: B32B 37/12, B32B 37/06

(54) **Hot bonding method, particularly for bonding a breathable fabric to a matrix made of foam, felt or the like**

(30) Priority: 09.10.2007 IT PD20070325
(71) Applicant: Monti Antonio S.P.A., 36016 Thiene VI (IT)
(72) Inventor: Monti, Vincenzo, 36016 THIENE VI (IT)
(74) Representative: Modiano, Micaela Nadia

(57) **Abstract**

A hot bonding method, particularly for bonding a breathable fabric to a matrix made of foam, felt or the like, comprising
- a first step of positioning between presser elements (10, 11) of a bonding press (12) a layered pack (13) that comprises at least a first layer (14), made of breathable fabric, a second layer (15), made of foam-like matrix, felt or the like, a third layer (16), made of an adhesive material that can be activated by heat, inserted between the first layer (14) and the second layer (15),
- a second step of closing the press (12),
- a third step of melting the third layer (16) by injecting superheated water vapour (17) into the pack (13).

The third step provides for injecting compressed air (20) into the pack (13) through the first presser element (10), the step beginning during the injection of superheated water vapour (17). There is also
- a fourth step of cooling the pack (13) by injecting only compressed air (20) therein,
- a fifth step of drying the pack (13) by drawing ambient air (21) through the pack (13) moved onto a suction table (22).

## Description

The present invention relates to a hot bonding method, particularly for bonding a breathable fabric to a matrix made of foam.

Methods for bonding a fabric to a foam matrix are currently known which provide for:
- the distribution of hotmelt adhesive material in the form of liquid glue distributed on the surface of the fabric,
- the melting of the surface of the foam matrix, to be bonded to the fabric, by exposure to a naked flame,
- the calendering of the fabric with the foam matrix, with the adhesive material interposed.

One drawback of this method is that the surface of the foam matrix, exposed to the naked flame, bums and produces polluting gases during combustion.

One known method, devised to obviate this drawback, provides for the melting of the adhesive material by using superheated water vapour. This method comprises:
- a first step of positioning between the pressing elements of an adhesive bonding press a layered pack which comprises
- a first layer, made of breathable fabric,
- a second layer, made of a foam-like matrix, felt or the like,
- a third layer, made of an adhesive material that can be activated by heat, inserted between the first layer and the second layer,
- a second step of closing the press in order to compact and spread on each other the first, second and third layers,
- a third step of melting the third layer by injecting superheated water vapour into the pack, through a first presser element, which is conveniently provided with holes at a surface thereof for abutment against the pack.
   As is known, this method has the drawback that the foam matrix often becomes impregnated with condensation water of the injected steam.
   The aim of the present invention is to provide a bonding method that obviates the drawbacks of currently known methods, causing the emission of harmless substances only.
   Within this aim, an object of the invention is to provide a method that allows to obtain a dry product.
   Another object of the invention is to provide a bonding method that is simple and easy to apply and can be implemented with equipment that has a relatively low cost.
   This aim and these and other objects, which will become better apparent hereinafter, are achieved by a hot bonding method, particularly for bonding a breathable fabric to a matrix made of foam, felt or the like, comprising
- a first step of positioning between the presser elements of a bonding press a layered pack that comprises at least
- a first layer, made of breathable fabric,
- a second layer, made of foam-like matrix, felt or the like,
- a third layer, made of an adhesive material that can be activated by heat, inserted between said first layer and said second layer,
- a second step of closing said press to compact and spread on each other said first, second and third layers,
- a third step of melting said third layer by injecting superheated water vapour into said pack, through at least one first presser element of said presser elements, by means of holes formed in a surface thereof for abutment with said pack,
characterized in that said third step provides for injecting air into said pack through said at least one first presser element, said step beginning during said injection of superheated water vapour, there being also
- a fourth step of cooling said pack by injecting only air therein, through said at least one first presser element,
- a fifth step of drying said pack by drawing, through said pack moved onto a suction table, ambient air drawn through said suction table.

Further characteristics and advantages of the invention will become better apparent from the following detailed description of a preferred but not exclusive embodiment of the method according to the invention, illustrated by way of non-limiting example in the accompanying drawings, wherein:
Figure 1 is a view of a product obtained with the method according to the invention;
Figure 2 is a view of a first step of the method according to the invention;
Figure 3 is a view of a second step and a third step of the method according to the invention;
Figure 4 is a view of a fourth step of the method according to the invention;
Figure 5 is a view of a fifth step of the method according to the invention.

It is noted that anything found to be already known during the patenting process is understood not to be claimed and to be the subject of a disclaimer.

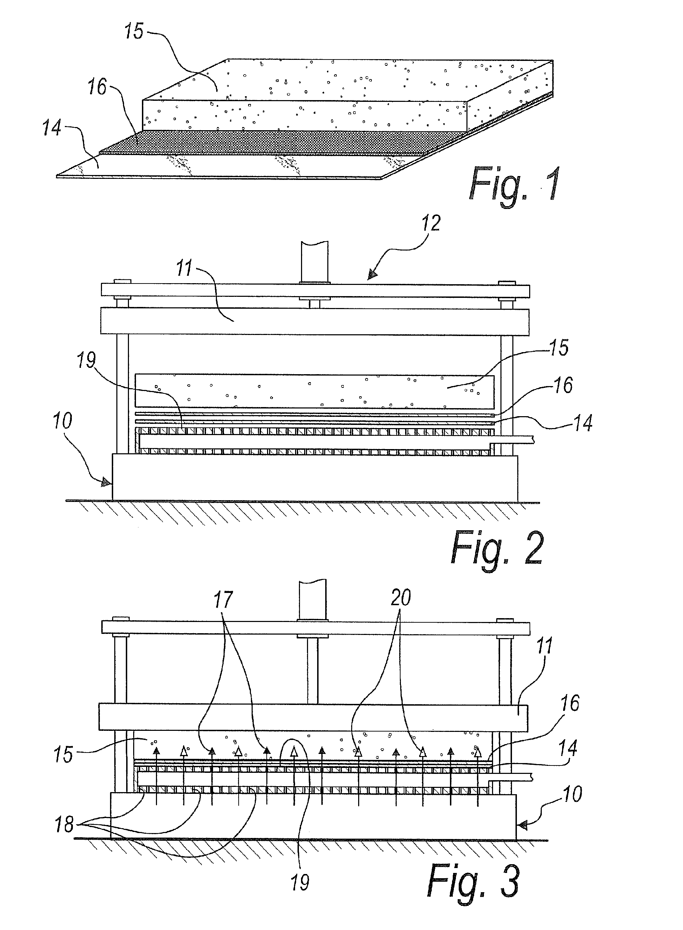

With reference to the figures, a hot bonding method, particularly for bonding a breathable fabric to a matrix made of foam, felt or the like, comprises
- a first step, shown in Figure 2, for positioning between presser elements 10 and 11 of a bonding press 12 a layered pack 13 which comprises at least
- a first layer 14, made of breathable fabric,
- a second layer 15, made of foam matrix, felt or the like,
- a third layer 16, made of an adhesive that can be activated by heat, inserted between the first layer 14 and the second layer 15,
- a second step of closing the press 12 for compacting and spreading, on each other, the first layer 14, the second layer 15 and the third layer 16,
- a third step of melting the third layer 16 by injecting superheated water vapour 17 into the pack 13 through at least the first one 10 of the presser elements 10 and 11, by means of holes 18 that are formed on a surface 19 thereof for abutment against the pack 13.

A particularity of the method according to the invention consists in that the third step provides for injecting air into the pack 13 through the first presser element 10, such step beginning during the injection of superheated water vapour 17.

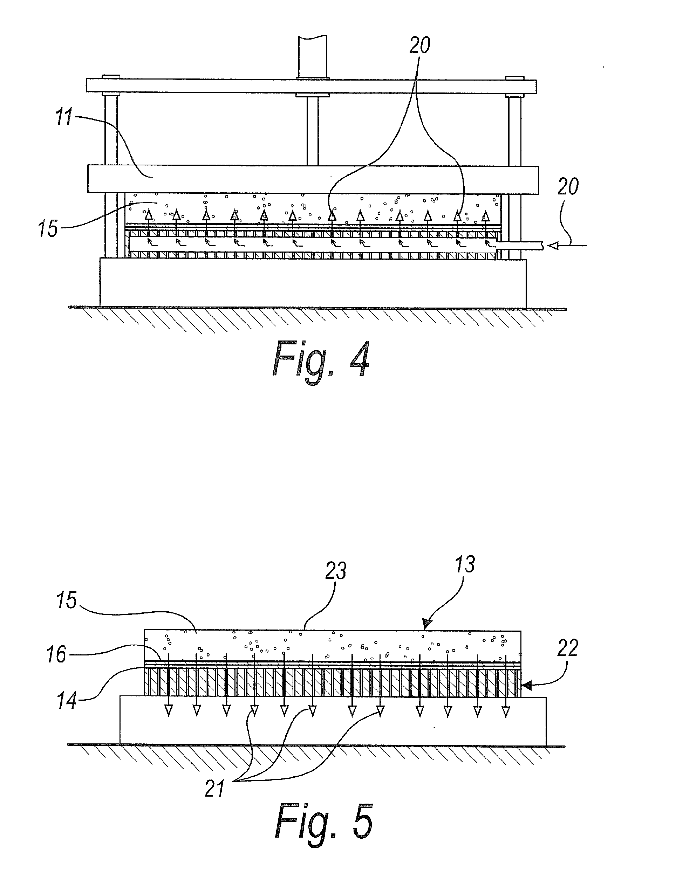

Advantageously, once the third step of injecting superheated water vapor 17 has begun, after a few seconds of injection of superheated water vapor 17 alone, the step for simultaneous injection of air, preferably compressed air 20, begins, and the air 20, by mixing with the superheated water vapour 17, becomes warm. Further, there is:
- a fourth step, shown in Figure 4, of cooling the pack 13 by injecting therein only compressed air 20, through the first presser element 10,
- a fifth step, shown in Figure 5, of drying the pack 13 by suction, through the pack 13, of ambient air 21 drawn by means of a suction table 22.

Advantageously, the fifth step also provides for the opening of the press 12 for disengaging the pack 13 from the second presser element 11 and moving the pack 13 onto the suction table 22.

Thus, the pack 13 adheres to the suction table 22 due to suction and the inflow of ambient air 21 drawn into the pack 13 occurs also through its free surface 23, which lies opposite the one that rests on the suction table 22.

In this manner, during the fourth step the compressed air 20 injected through the pack 13
- cools the adhesive material that composes the third layer 16, thus making it solidify, and
- removes part of the condensation that has remained in the pack 13.

In the fifth step, the suction of ambient air 21 through the pack 13 allows its drying, and particularly the drying of the second layer 15, made of a foam matrix, felt or the like, in which condensation of the superheated water vapour 17 accumulates.

In practice it has been found that the invention achieves the proposed aim and objects, providing a bonding method that obviates the drawbacks of currently known methods, causing the emission of harmless substances only, simultaneously allowing to obtain a dry product.

Further, an adhesive bonding method according to the invention is simple and easy to apply and can be performed with equipment that has a relatively low cost.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2007A000325 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hot bonding method, particularly for bonding a breathable fabric to a matrix made of foam, felt or the like, comprising
- a first step of positioning between presser elements (10, 11) of a bonding press (12) a layered pack (13) that comprises at least
- a first layer (14), made of breathable fabric,
- a second layer (15), made of foam-like matrix, felt or the like,
- a third layer (16), made of an adhesive material that can be activated by heat, inserted between said first layer (14) and said second layer (15),
- a second step, of closing said press (12) to compact and spread on each other said first, second and third layers (14, 15, 16),
- a third step of melting said third layer (16) by injecting superheated water vapour (17) into said pack (13), through at least one first presser element (10) of said presser elements (10, 11), by means of holes (18) formed in a surface thereof for abutment with said pack (13),
**characterized in that** said third step provides for injecting air into said pack (13) through said at least one first presser element (10), said step beginning during said injection of superheated water vapour (17), there being also
- a fourth step, of cooling said pack (13) by injecting only air therein, through said at least one first presser element (10),
- a fifth step, of drying said pack (13) by drawing, through said pack (13) moved onto a suction table (22), ambient air (21) drawn through said suction table (22).

2. The hot bonding method according to claim 1, **characterized in that** said fifth step provides for the opening of said press (12) for the disengagement of said pack (13) from said second presser element (11), and the movement of said pack (13) on said suction table (22).
